# EUROPÄISCHE PATENTSCHRIFT

(11) **EP 3 214 416 B1**
(45) Veröffentlichungstag und Bekanntmachung des Hinweises auf die Patenterteilung: **29.04.2020**
(21) Anmeldenummer: 16202379.0
(22) Anmeldetag: 06.12.2016
(51) Int. Cl.: G01F 15/00, G01F 15/06

(54) **DURCHFLUSSMESSGERÄT, INSBESONDERE FÜR DEN EICHPFLICHTIGEN VERKEHR**
FLOW METER, IN PARTICULAR FOR CUSTODY TRANSFER
DÉBITMÈTRE, EN PARTICULIER POUR UTILISATION SOUMISE À OBLIGATION D'ÉTALONNAGE

(30) Priorität: 04.03.2016 DE 102016104013
(43) Veröffentlichungstag der Anmeldung: 06.09.2017
(73) Patentinhaber: Krohne Messtechnik GmbH, 47058 Duisburg (DE)
(72) Erfinder: Brockhaus, Helmut, 46145 Oberhausen (DE)
(74) Vertreter: Gesthuysen Patent- und Rechtsanwälte

(56) Entgegenhaltungen:
- EP-A1- 1 195 511
- EP-A2- 0 524 839
- WO-A1-2016/022756
- DE-A1-102008 002 027
- US-A1- 2007 171 561
- US-A1- 2011 191 037

## Beschreibung

Die Erfindung betrifft ein Durchflussmessgerät, insbesondere für den eichpflichtigen Verkehr, mit einem Gehäuse, wenigstens einer in dem Gehäuse angeordneten Auswerteeinrichtung und mit einer in dem Gehäuse angeordneten Schnittstelle zur Kommunikation mit einem externen Bediengerät, wobei die Auswerteeinrichtung über die Schnittstelle mit Daten beschreibbar ist.

Durchflussmessgeräte der vorgenannten Art sind aus dem Stand der Technik in vielerlei Ausgestaltungen bekannt. An Durchflussmessungen im eichpflichtigen Verkehr werden besondere Anforderungen gestellt, beispielsweise weil ein lauterer Handelsverkehr sichergestellt werden muss oder weil die Messsicherheit im Bereich des öffentlichen Interesses liegt, häufig dadurch bedingt, dass eine mengenmäßige Steuer auf das transportierte und entnommene Medium erhoben wird.

Eichpflichtige Durchflussmessungen unterliegen einer Vielzahl an gesetzlichen und institutionellen Bestimmungen, durch die eine besondere Sicherheit der Messungen gewährleistet wird. Beispielhaft zu nennen sind Bestimmungen der internationalen Organisation für das gesetzliche Messwesen (Organisation Internationale de Metrologie Legale (OIML)), hier beispielsweise die Richtlinie OIML R 117 für Messsysteme für andere Flüssigkeiten als Wasser. Empfehlungen der OIML fließen häufig in nationale Normen ein und finden so weitreichende Beachtung. Eine europäische Richtlinie, die sich mit den Voraussetzungen zur Zulassung eines Messgeräts für den eichpflichtigen Verkehr befasst, ist die Richtlinie 2004/22/EG der Europäischen Union.

Eine zentrale Eigenschaft von Durchflussmessgeräten für den eichpflichtigen Verkehr ist ihre Manipulationssicherheit. Es muss mit großer Wahrscheinlichkeit ausgeschlossen werden können, dass ein Durchflussmessgerät für den eichpflichtigen Verkehr von außen derart manipuliert wird, dass seine Messgenauigkeit nicht mehr sichergestellt ist bzw. die Messung verfälscht wird. Dies könnte beispielsweise dadurch geschehen, dass die für das Durchflussmessgerät von einer hoheitlichen Prüfstelle festgestellten und in dem Durchflussmessgerät abgelegten Kalibrierparameter überschrieben werden. Eine derartige Manipulation ist jedenfalls insoweit zu verhindern, als dass eine Manipulation mit technischen Mitteln erschwert wird und eine einmal erfolgte Manipulation jedenfalls eindeutig erkennbar ist.

Es ist bekannt, dass das Öffnen von Durchflussmessgeräten bzw. der Gehäuse dieser Durchflussmessgeräte durch ein Siegel verhindert wird, so dass eine Beeinflussung des Durchflussmessgeräts durch den Bruch des Siegels erst ermöglicht und damit nachweisbar wird. Moderne Durchflussmessgeräte sind häufig gar nicht mehr ohne Weiteres zu öffnen, beispielsweise aufgrund von getroffenen Explosionsschutzmaßnahmen.

Die US 2011/191037 A1 beschreibt ein Durchflussmessgerät gemäß dem Oberbegriff des unabhängigen Patentanspruchs 1.

Aufgabe der vorliegenden Erfindung ist es, einen Schutzmechanismus gegen Beeinflussung von Durchflussmessgeräten bereitzustellen, die über eine eingebaute Schnittstelle verfügen, über die die Auswerteeinrichtung des Durchflussmessgerätes beeinflusst werden kann, bei denen also etwas anderes als eine rein mechanische Zugangskontrolle zu realisieren ist.

Die zuvor aufgezeigte und hergeleitete Aufgabe ist bei dem eingangs dargestellten Durchflussmessgerät dadurch realisiert, dass in dem Gehäuse wenigstens zwei Schreibschutz-Sensorelemente angeordnet sind, dass die Gehäuseaußenseite eine Aufnahme für wenigstens ein Schreibschutz-Beeinflussungselement aufweist, dass das Schreibschutz-Beeinflussungselement im eingesetzten Zustand in der Aufnahme die Schreibschutz-Sensorelemente in einen Schreibschutzzustand versetzt, dass der Schreibschutzzustand der Schreibschutz-Sensorelemente von der Auswerteeinrichtung detektiert wird, wobei bei Detektion des Schreibschutzzustandes wenigstens eines der Schreibschutz-Sensorelemente von der Auswerteeinrichtung zumindest teilweise ein Beschreiben der Auswerteeinrichtung mit Daten über die Schnittstelle verhindert wird.

Die in dem Gehäuse des Durchflussmessgeräts angeordnete Schnittstelle dient der Übertragung von Daten über die Gehäusegrenze des Durchflussmessgeräts hinweg, also von einem externen, außerhalb des Gehäuses des Durchflussmessgeräts befindlichen Bediengerät zu der innerhalb des Gehäuses des Durchflussmessgeräts angeordneten Auswerteeinrichtung bzw. von der Auswerteeinrichtung zu dem Bediengerät. Die Schnittstelle kann durch eine elektromechanische Kupplung, also eine Stecker-Buchse-Konstruktion realisiert sein, bei der Schnittstelle kann es sich aber auch um ein Funkmodul handeln, das über elektromagnetische Wellen - im sichtbaren oder unsichtbaren Bereich - den Austausch von Informationen zwischen der Auswerteeinheit des Durchflussmessgeräts und einem externen Bediengerät realisiert. Der Austausch von Daten geschieht mittels eines herstellerunabhängig genormten Kommunikationsprotokolls oder über ein herstellerabhängiges - also proprietäres - Kommunikationsprotokoll.

Insbesondere wenn das Durchflussmessgerät Maßnahmen des Explosionsschutzes realisiert, ist das Innere des Durchflussmessgeräts nicht ohne Weiteres zugänglich. Das bedeutet, dass beispielsweise während eines Eichvorganges gewonnene Kalibrierdaten über die Schnittstelle in die Auswerteeinrichtung des Durchflussmessgeräts transportiert und dort gespeichert werden müssen.

Die erfindungsgemäße Realisierung eines Schutzes gegen das missbräuchliche Beschreiben der Auswerteeinheit mit Daten funktioniert ebenfalls über die Grenzen des Gehäuses des Durchflussmessgeräts hinweg. Dabei ist es möglich, den Schreibschutz durch das außerhalb des Gehäuses anzubringende Schreibschutz-Beeinflussungselement in dem Durchflussmessgerät zu aktivieren, wobei das Schreibschutz-Beeinflussungselement in die an der Außenseite des Gehäuses vorgesehene Aufnahme eingesetzt wird. Das dort platzierte Schreibschutz-Beeinflussungselement beeinflusst - aktiv oder passiv - die innerhalb des Gehäuses des Durchflussmessgeräts angeordneten wenigstens zwei Schreibschutz-Sensorelemente.

Die - wie auch immer geartete - Beeinflussung der wenigstens zwei Schreibschutz-Sensorelemente durch das Schreibschutz-Beeinflussungselement wird von der Auswerteeinrichtung detektiert. Die Auswerteeinrichtung ist also in irgendeiner Weise - über eine messtechnische Zwischenschaltung oder direkt - mit den Schreibschutz-Sensorelementen (oder auch nur mit einem Schreibschutz-Sensorelement) verbunden, so dass durch sie der Beeinflussungszustand der Schreibschutz-Sensorelemente ausgewertet werden kann. Es ist nicht zwingend erforderlich, dass die Auswerteeinheit physikalisch mit beiden Schreibschutz-Sensorelementen verbunden ist, der Beeinflussungszustand der beiden Schreibschutz-Sensorelemente kann sich auch durch Aufnahme nur eines einzigen Messsignals erschließen.

Erfindungsgemäß ist erkannt worden, dass durch die Verwendung wenigstens zweier Schreibschutz-Sensorelemente ein viel höheres Maß an Sicherheit gegen eine zu verhindernde Beeinflussung von außen möglich ist, als dies mit bei einem einzigen Beeinflussungs-Sensorelement möglich wäre. Im Ergebnis ist das Durchflussmessgerät so ausgestaltet, dass im nicht eingesetzten Zustand des Schreibschutz-Beeinflussungselements ein Beschreiben der Auswerteeinheit über die Schnittstelle mit Daten möglich ist, wohingegen bei der Positionierung des Schreibschutz-Beeinflussungselements in der Aufnahme an oder in der Gehäuseaußenseite ein Beschreiben der Auswerteeinrichtung mit Daten über die Schnittstelle verhindert ist. Der Beeinflussungszustand der Schreibschutz-Sensorelemente wird dazu durch die Auswerteeinheit ausgewertet und ein Beschreiben der Auswerteeinheit mit Daten über die Schnittstelle verhindert im Falle der Detektion des Schreibschutzzustandes.

Gemäß einer bevorzugten Ausgestaltung des Durchflussmessgeräts ist vorgesehen, dass bei Detektion des Schreibschutzzustandes wenigstens eines der Schreibschutz-Sensorelemente das Beschreiben der Auswerteeinrichtung zumindest mit solchen Daten über die Schnittstelle verhindert wird, die die Ermittlung des Durchflussmesswertes betreffen, insbesondere also ein Beschreiben der Auswerteeinrichtung dahingehend verhindert wird, dass die in der Auswerteeinrichtung hinterlegten Kalibrierdaten manipuliert werden.

Gemäß einer bevorzugten Ausgestaltung des Durchflussmessgeräts wird bei Detektion des Schreibschutzzustandes wenigstens eines der Schreibschutz-Sensorelemente das Beschreiben der Auswerteeinrichtung verhindern, indem die Schnittstelle vollständig deaktiviert wird. In diesem Fall können also über die Schnittstelle keine Daten ausgetauscht werden. Die Schnittstelle könnte beispielsweise nicht mit Energie versorgt werden oder es könnte die entsprechende Software-Routine deaktiviert werden, die den Datenaustausch über die Schnittstelle realisiert. Gemäß einer anderen bevorzugten Ausgestaltung des Durchflussmessgeräts ist vorgesehen, dass nicht die gesamte Schnittstelle deaktiviert wird, sondern dass das Beschreiben bestimmter Speicherbereiche der Auswerteeinrichtung gesperrt wird, insbesondere die Speicherbereiche, in denen die Kalibrierdaten für das Durchflussmessgerät hinterlegt sind. Bei dieser Variante wäre es weiterhin möglich, Informationen mit dem Durchflussmessgerät über die Schnittstelle auszutauschen, es wäre jedoch nicht mehr möglich, das Durchflussmessgerät in einer für das Messergebnis erheblichen Weise zu beeinflussen.

Eine vorteilhafte Weiterbildung des erfindungsgemäßen Durchflussmessgeräts ist dadurch realisiert, dass die Aufnahme so ausgestaltet ist, dass das Schreibschutz-Beeinflussungselement im eingesetzten Zustand in der Aufnahme definiert gehalten ist und die Position des Schreibschutz-Beeinflussungselements durch ein Siegel gesichert ist. Bei dem Siegel kann es sich beispielsweise um eine Plombe oder auch um eine Siegelmarke handeln. Das Schreibschutz-Beeinflussungselement kann beispielsweise durch einen auf das Gehäuse aufsetzbaren Deckel gehalten werden, wobei der Deckel mittels des Siegels an dem Gehäuse gehalten wird, es muss also nicht das Schreibschutz-Beeinflussungselement selbst in Kontakt mit dem Siegel kommen. Wichtig ist, dass das Schreibschutz-Beeinflussungselement nur durch Bruch des Siegels aus der Halterung entfernbar ist und damit der Schreibschutzzustand des Durchflussmessgeräts aufgehoben werden kann.

Wenn hier von einer Auswerteeinrichtung die Rede ist, dann bedeutet das nicht, dass diese Auswerteeinrichtung in einem einzigen zusammenhängenden elektronischen Modul vorliegen muss, vielmehr kann es sich auch um verteilte elektronische Komponenten handeln. Die Auswerteeinrichtung wird üblicherweise wenigstens einen Mikrocontroller oder einen Mikroprozessor aufweisen mit den üblichen Schnittstellen oder Peripheriekomponenten, die Auswerteeinrichtung stellt also üblicherweise ein eingebettetes Rechnersystem dar.

Bei einer bevorzugten Variante des erfindungsgemäßen Durchflussmessgerätes sind die Schreibschutz-Sensorelemente als Magnetfeldsensoren ausgestaltet und ist das Schreibschutz-Beeinflussungselement als Magnet - insbesondere als Permanentmagnet - ausgestaltet. Die Magnetfeldsensoren sind innerhalb des Gehäuses selbstverständlich so angeordnet, dass sie im Wirkbereich des in der Halterung eingesetzten Schreibschutz-Beeinflussungselements, also des Magneten, sind.

Es kann versucht werden, mittels eines missbräuchlich eingesetzten starken Magneten das Magnetfeld des als Magnet ausgestalteten Schreibschutz-Beeinflussungselements zu kompensieren. Dies ist bei zwei Schreibschutz-Sensorelementen in Form von Magnetfeldsensoren aber praktisch unmöglich, insbesondere dann, wenn die Magnetfeldsensoren in bestimmter Weise zueinander und zu dem Schreibschutz-Beeinflussungselement angeordnet sind, wozu auf die Figurenschreibung verwiesen wird.

Neben der aktiven Lösung mit einem aktiv auf die Schreibschutz-Sensorelemente einwirkenden Permanentmagneten sind auch passive Realisierungen des erfindungsgemäßen Durchflussmessgeräts denkbar. Bei einer alternativen Realisierung des erfindungsgemäßen Durchflussmessgeräts sind die Schreibschutz-Sensorelemente als sich gegenüberliegende erste elektrische Leitfläche und zweite elektrische Leitfläche ausgestaltet, sodass sie einen Schreibschutz- Kondensator bilden. Ferner ist das Schreibschutz-Beeinflussungselement als dritte elektrische Leitfläche ausgebildet, wobei diese dritte Leitfläche im eingesetzten Zustand in der Aufnahme dem Schreibschutz-Kondensator gegenübersteht und mit ihm einen kapazitiven Spannungsteiler bildet. Die dritte Leitfläche, die das Schreibschutz-Beeinflussungselement realisiert, wirkt in diesem Fall nicht aktiv auf die wenigstens zwei Schreibschutz-Sensoren, jedoch bildet sie mit der ersten und der zweiten elektrischen Leitfläche der Schreibschutz-Sensorelemente eine geometrisch-konstruktive Kondensator-Anordnung, die ein anderes physikalisches Verhalten aufweist als bei nicht eingesetzter dritter elektrischer Leitfläche in der Aufnahme des Gehäuses. Wenn der Schreibschutz-Kondensator in dem Durchflussmessgerät entsprechend geschaltet ist, lässt sich diese physikalische Veränderung messtechnisch durch die Auswerteeinrichtung erfassen und genauso eindeutig hinsichtlich der Anwesenheit bzw. der Abwesenheit des Schreibschutz-Beeinflussungselementes auswerten.

Im Einzelnen gibt es nun eine Vielzahl von Möglichkeiten, das erfindungsgemäße Durchflussmessgerät für den eichfähigen Verkehr gemäß Patentanspruch 1 auszugestalten und weiterzubilden. Vorteilhafte Ausgestaltungen ergeben sich aus den dem unabhängigen Patentanspruch 1 nachfolgenden Patentansprüchen und aus den Figuren mit der nachfolgenden Beschreibung. In der Zeichnung zeigt.
- Fig. 1: eine schematische Darstellung eines erfindungsgemäßen Durchflussmessgeräts für den eichpflichtigen Verkehr,
- Fig. 2: eine schematische Darstellung der Realisierung eines Schreibschutzes bei einem erfindungsgemäßen Durchflussmessgerät auf der Basis von Magnetfeldsensoren mit einem Permanentmagneten,
- Fig. 3: schematisch die Realisierung einer Messschaltung auf Basis von Hall-Grenzwertschaltern und
- Fig. 4: eine schematische Darstellung der Realisierung eines Schreibschutzes bei einem erfindungsgemäßen Durchflussmessgerät auf Basis von elektrischen Leitflächen, die eine KondensatorAnordnung realisieren, die als kapazitiver Spannungsteiler wirkt.

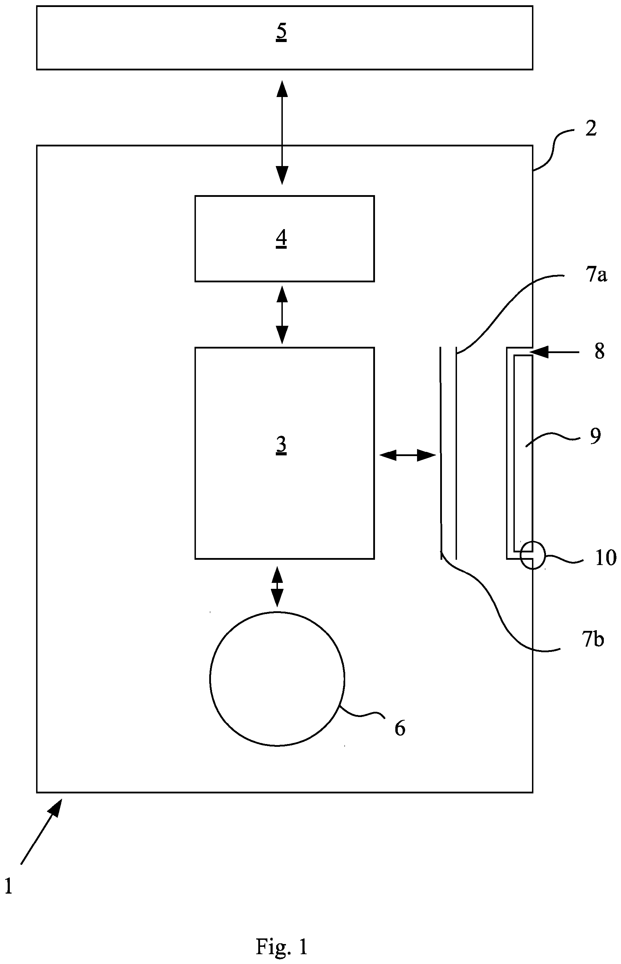

In Fig. 1 ist in ganz schematischer Weise ein Durchflussmessgerät 1 dargestellt, das für den eichpflichtigen Verkehr hergerichtet ist. Das Durchflussmessgerät 1 weist ein Gehäuse 2 auf, in dem eine Auswerteeinrichtung 3 und eine Schnittstelle 4 zur Kommunikation mit einem externen Bediengerät 5 angeordnet sind. Angedeutet ist ferner eine Messrohröffnung 6, durch die ein messtechnisch zu erfassendes Medium strömt. Durch den Doppelpfeil zwischen der Auswerteeinrichtung 3 und der Messrohröffnung 6 wird verdeutlicht, dass die Auswerteeinrichtung - nach welchem Messprinzip auch immer - die Strömung durch das Messrohr messtechnisch erfasst, was die Hauptaufgabe des Durchflussmessgeräts 1 ist.

In dem Gehäuse 2 des Durchflussmessgeräts 1 sind zwei Schreibschutz-Sensorelemente 7a, 7b angeordnet, mit denen eine Schreibschutz-Funktionalität realisiert wird. Die Gehäuseaußenseite des Gehäuses 2 weist eine Aufnahme 8 für ein Schreibschutz-Beeinflussungselement 9 auf. Das Durchflussmessgerät 1 ist so ausgestaltet, dass das Schreibschutz-Beeinflussungselement 9 im eingesetzten Zustand in der Aufnahme 8 die Schreibschutz-Sensorelemente 7a, 7b in einen Schreibschutzzustand versetzt, wobei der Schreibschutzzustand der Schreibschutz-Sensorelemente 7a, 7b von der Auswerteeinrichtung 3 messtechnisch erfasst, also detektiert wird, was durch den Doppelpfeil angedeutet ist. Die Auswerteeinrichtung 3 ist so ausgestaltet, dass bei Detektion des Schreibschutzzustandes wenigstens eines der Schreibschutz-Sensorelemente 7a, 7b zumindest teilweise ein Beschreiben der Auswerteeinrichtung 3 mit Daten über die Schnittstelle 4 verhindert wird.

Das dargestellte Durchflussmessgerät 1 ist aus Gründen des Explosionsschutzes gekapselt, sodass also das Gehäuse 2 ohne Weiteres nicht geöffnet werden kann. Die Schnittstelle 4 ist so ausgestaltet, dass gleichwohl ein Datenaustausch mit dem externen Bediengerät 5 realisiert werden kann, vorliegend handelt es sich um eine auf einer Funktechnologie basierenden Schnittstelle 4. Bei dem Bediengerät 5 handelt es sich in diesem Fall um ein Handheld-Gerät, dass mit dem Durchflussmessgerät 1 beispielsweise auch im Einbauzustand im Prozess Kontakt aufnehmen kann. Bei anderen Ausgestaltungen handelt es sich bei der Schnittstelle 4 um eine Hardware-Schnittstelle auf Basis einer galvanischen Verbindungstechnik.

Der besondere Vorteil des dargestellten Durchflussmessgeräts 1 liegt darin, dass die Verwendung von wenigstens zwei Schreibschutz-Sensorelementen 7a, 7b dazu führt, dass mit einer sehr hohen Sicherheit ein Schreibschutzzustand manipuliersicher realisiert werden kann.

Bei dem in Fig. 1 dargestellten Durchflussmessgerät 1 wird der Schreibschutzzustand wenigstens eines der Schreibschutz-Sensorelemente 7a, 7b durch die Auswerteeinrichtung 3 detektiert. Befindet sich auch nur eines der Schreibschutz-Sensorelemente 7a, 7b in einem Schreibschutzzustand, wird das Beschreiben der Auswerteeinrichtung 3 mit Daten über die Schnittstelle 4 verhindert, die die Ermittlung des Durchflussmesswertes betreffen. Im vorliegenden Fall wird das Beschreiben der Auswerteeinrichtung 3 mit Kalibrierdaten verhindert. Damit ist sichergestellt, dass das Durchflussmessgerät 1 in eine für die Ermittlung des Durchflussmesswertes erheblichen Weise beeinflusst wird, wenn das Schreibschutz-Beeinflussungselement 9 in die Aufnahme 8 eingesetzt ist.

In Fig. 1 ist angedeutet, dass die Aufnahme 8 so ausgestaltet ist, dass das Schreibschutz-Beeinflussungselement 9 im eingesetzten Zustand in der Aufnahme 8 definiert gehalten ist und die Position des Schreibschutz-Beeinflussungselements 9 durch ein Siegel 10 gesichert ist. Im vorliegenden Fall handelt es sich bei dem Siegel 10 um eine Plombe. Nur nach Entfernen der Plombe und damit nach Bruch des Siegels 10, ist das Schreibschutz-Beeinflussungselement 9 aus der Aufnahme 8 entfernbar, sodass die Schreibschutz-Sensorelemente 7a, 7b nicht mehr unter dem Einfluss des Schreibschutz-Beeinflussungselements 9 stehen und daher auch keinen Schreibschutzzustand der Schreibschutz-Sensorelemente 7a, 7b mehr detektiert werden kann. Der Siegelbruch selbst und damit die mögliche Einflussnahme auf das Durchflussmessgerät 1 ist ohne Weiteres erkennbar.

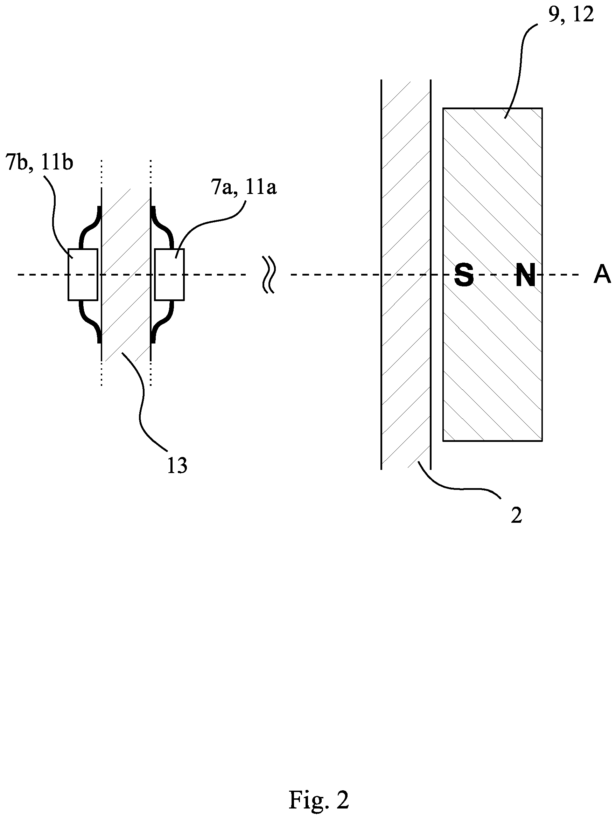

In Fig. 2 ist schematisch dargestellt, wie eine spezielle technische Umsetzung der Schreibschutz-Funktionalität des zuvor beschriebenen Durchflussmessgerätes 1 realisiert werden kann. Hier sind die Schreibschutz-Sensorelemente 7a, 7b als Magnetfeldsensoren 11a, 11b ausgestaltet und das Schreibschutz-Beeinflussungselement 9 ist als Magnet 12, vorliegend als Permanentmagnet 12, ausgestaltet. Im dargestellten Fall sind der Magnet 12 und die Magnetfeldsensoren 11a, 11b kollinear angeordnet. Im eingesetzten Zustand des Magneten 12 in der Aufnahme 8 - hier ist nur ein Ausschnitt des Gehäuses 2 dargestellt - verlaufen die Feldlinien der magnetischen Flussdichte des Magneten 12 im Wesentlichen in Richtung der kollinearen Anordnung des Magneten 12 und der Magnetfeldsensoren 11a, 11b. In Fig. 2 sind die Magnetfeldlinien zwar nicht dargestellt, es ist jedoch gezeigt, dass die Magnetfeldsensoren 11a, 11b und der Magnet 12 auf einer Achse A liegen und die Polarität des Permanentmagneten 12 ebenfalls in Richtung des Achsverlaufes ausgerichtet ist, Polarität ist angedeutet durch die Buchstaben "S" und "N". Die Anordnung ist geschickt, weil die Magnetfeldsensoren 11a, 11b so im Gebiet der größten Feldstärke des Permanentmagneten 12 liegen. Es hat sich als geschickt herausgestellt, den Magneten 12 und die Magnetfeldsensoren 11a, 11b möglichst nah zueinander anzuordnen.

Die Darstellung in Fig. 2 ist nicht maßstabsgerecht. Eine typische Konfiguration könnte so aussehen, dass bei einer Wandstärke von 2 mm des Gehäuses 2 ein Permanentmagnet mit einem Durchmesser von 10 mm und einer Höhe von etwa 5 mm verwendet wird, um eine ausreichende Flussdichte erregen zu können. Die Magnetfeldsensoren 11a, 11b sind als Hall-Grenzwertschalter ausgestaltet, in einer konkreten Ausgestaltung zum Beispiel durch das Bauelement mit der Bezeichnung AH1802 von Diodes Incorporated. Die Magnetfeldsensoren 11a, 11b sind auf den beiden Seiten einer Platine 13 angebracht und in einer nicht näher dargestellten Schaltung verlötet. Die Entfernung der Magnetfeldsensoren 11a, 11b untereinander kann beispielsweise etwa bei einem fünftel des mittleren Abstandes zu dem Magneten 12 liegen. Bei dem zuvor schon beschriebenen konkreten Ausführungsbeispiel ist der erste Magnetfeldsensor 11a etwa 6,5 mm von dem Magneten 12 entfernt angeordnet und ist der zweite Magnetfeldsensor 11b etwa 9 mm von dem Magneten 12 angeordnet, es wird hierbei Bezug genommen auf die nächstgelegene Grenzfläche des Magneten 12, im dargestellten Ausführungsbeispiel also die Grenzfläche, an dem der Südpol S ausgebildet ist.

Der Vorteil der Anordnung liegt darin, dass es praktisch nicht möglich ist, durch eine äußere Beeinflussung mit einem weiteren Magneten das Magnetfeld des Magneten 12 so zu kompensieren, dass gleichzeitig beide als Hall-Grenzwertschalter ausgebildeten Magnetfeldsensoren 11a, 11b in den unbeeinflussten Zustand geraten. Durch die Verwendung zweier Schreibschutz-Sensorelemente 7a, 7b wird also ein sehr hohes Maß an Sicherheit vor einer unzulässigen Manipulation erreicht.

Bei anderen Ausgestaltungen können auch mehr als zwei Schreibschutz-Sensorelemente verwendet werden, es hat sich jedoch gezeigt, dass allein durch Verwendung von zwei Schreibschutz-Sensorelementen gegenüber der Verwendung eines einzigen Schreibschutz-Sensorelements ein erheblicher Gewinn an Sicherheit erzielt wird, der auch ausreichend für die Anforderungen von Geräten im eichpflichtigen Verkehr ist.

Die als Hall-Grenzwertschalter ausgestalteten Magnetfeldsensoren 11a, 11b weisen einen typischen Grenzwert auf, bei dem der Grenzwertschalter schaltet und beispielsweise am Ausgang von einem spannungsmäßigen High-Level auf einen Low-Level schaltet oder umgekehrt. Vorzugsweise werden der Magnet 12 und die als Grenzwertschalter ausgelegten Magnetfeldsensoren 11a, 11b so zueinander angeordnet und beabstandet, dass der Magnet 12 im eingesetzten Zustand in der Aufnahme 8 am Montageort der als Grenzwertschalter ausgestalteten Magnetfeldsensoren 11a, 11b eine magnetische Flussdichte erzeugt, die mindestens doppelt so stark ist wie der Grenzwert der Grenzwertschalter. Im dargestellten Ausführungsbeispiel ist die am Montageort der Magnetfeldsensoren 11a, 11b durch den Magnet 12 erzeugte magnetische Flussdichte etwa 8 mal so hoch wie der Schwellwert, bei dem die Hall-Grenzwertschalter 11a, 11b umschalten. Diese Maßnahme erschwert es zusätzlich, die Schreibschutz-Anordnung von außerhalb des Durchflussmessgeräts 1 so zu beeinflussen, dass beide Magnetfeldsensoren 11a, 11b gleichzeitig in den entsperrten Zustand gelangen. Gerade bei den Als Grenzwertschalter ausgebildeten Magnetfeldsensoren, die unabhängig von der Polarität des Magnetfeldes auslösen, muss ein verhältnismäßig kleines Fenster der magnetischen Flussdichte getroffen werden, um die Grenzwertschalter zu entsperren. Wenn der entsperrte Bereich beispielsweise im Bereich von +- 2 mT liegt und das durch den Permanentmagneten 12 erzeugte Magnetfeld am Montageort des ersten Grenzwertschalters eine magnetische Flussdichte von 20 mT aufweist und am Ort des zweiten Grenzwertschalters eine magnetische Flussdichte von 30 mT aufweist, dann ist es praktisch unmöglich, mit einem externen Manipulationsmagneten das Magnetfeld am Montageort beider Grenzwertschalter auf einen Wert zwischen +-2 mT zu kompensieren

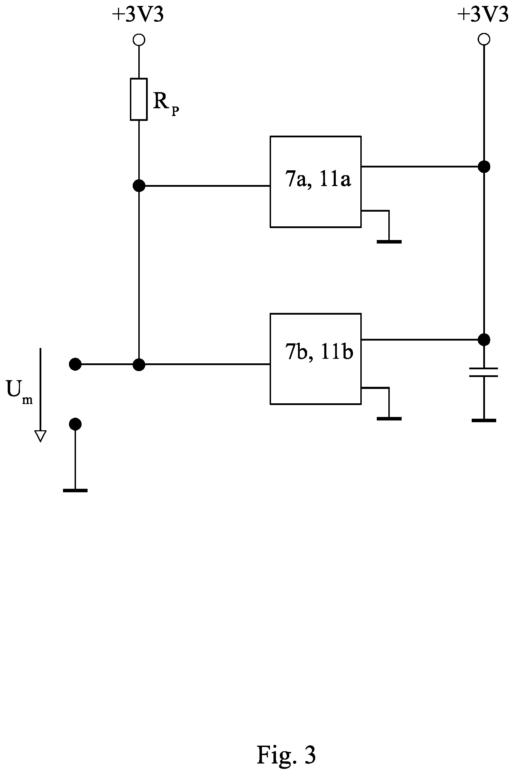

In Fig. 3 ist schließlich eine einfache Schaltung dargestellt, mit der eine Oder-Auswertung der in Fig. 2 dargestellten Hall-Grenzwertschalter - beispielsweise realisiert durch Bauteile des Typ AH1802 von Diodes Incorporated - realisiert werden kann. Die Magnetfeldsensoren 11a, 11b sind hier Hall-Grenzwertschalter des vorgenannten Typs. Auf der rechten Seite der Magnetfeldsensoren 11a, 11b ist die spannungsmäßige Versorgung der Bauteile dargestellt, auf der linken Seite sind die elektrischen Ausgänge der Magnetfeldsensoren 11a, 11b elektrisch zusammengeschaltet und über einen Pull-Up-Widerstand R_{P} an die Betriebsspannung von 3,3 V angeschlossen. Da die Ausgänge der verwendeten Hall-Grenzwertschalter 11a, 11b durch Open-Drain-Schaltungen realisiert sind, geht die Detektionsspannung Uₘ für den Beeinflussungszustand der Magnetfeldsensoren 11a, 11b gegen Masse, sobald der Ausgang eines der Magnetfeldsensoren 11a, 11b gegen Masse schaltet. Deshalb wird durch die angegebene Schaltung der Schreibschutzzustand insgesamt detektiert, wenn auch nur ein Magnetfeldsensor 11a, 11b sich in diesem Zustand befindet.

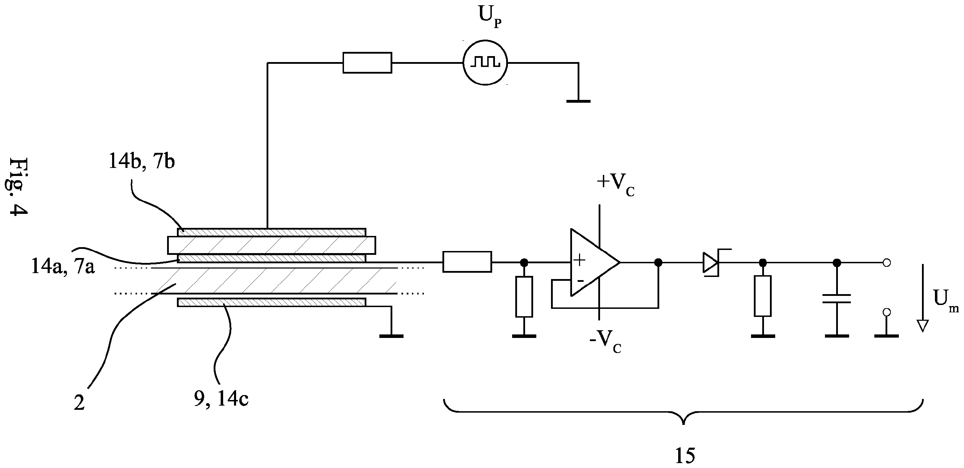

Bei dem Ausführungsbeispiel gemäß Fig. 4 wird ein anderes Messprinzip verfolgt. Die Schreibschutz-Sensorelemente 7a, 7b sind hier als sich gegenüberliegende erste elektrische Leitfläche 14a und zweite elektrische Leitfläche 14b ausgestaltet und bilden so einen Schreibschutz-Kondensator. Das Schreibschutz-Beeinflussungselement 9 ist im Gegensatz zu der zuvor beschriebenen Lösungsvariante als passives Beeinflussungselement 9 ausgeführt, nämlich als dritte elektrische Leitfläche 14c. Die dritte Leitfläche 14c steht im eingesetzten Zustand in der Aufnahme 8 dem Schreibschutz-Kondensator bestehend aus der ersten elektrischen Leitfläche 14a und der zweiten elektrischen Leitfläche 14b gegenüber und bildet mit ihm so einen kapazitiven Spannungsteiler. Typischerweise sind die erste elektrische Leitfläche 14a, die zweite elektrische Leitfläche 14b und die dritte elektrische Leitfläche 14c parallel zueinander ausgerichtet, wobei die erste elektrische Leitfläche 14a und die dritte elektrische Leitfläche 14c durch das Gehäuse 2 voneinander getrennt sind. Um einen wirkungsvollen Effekt zu erzielen, sollte die dritte elektrische Leitfläche 14c geerdet sein.

Bei der Schaltung gemäß Fig. 4 ist die zweite Leitfläche 14b des Schreibschutz-Kondensators mit einer periodischen elektrischen Spannung Up beaufschlagt, hier mit einer periodischen elektrischen Spannung mit einem arithmetischen Mittelwert ungleich Null, nämlich mit einer Rechteckspannung mit einem Tastverhältnis von 50 %. Aufgrund der kapazitiven Kopplung überträgt sich die Rechteckspannung auch auf die erste elektrische Leitfläche 14a. Im eingesetzten Zustand der dritten Leitfläche 14c an die Gehäusewand 2 gegenüber der ersten elektrischen Leitfläche 14a - insbesondere bei Erdung der dritten Leitfläche 14c -, reduziert sich die von der ersten elektrischen Leitfläche 14a abgreifbare elektrische Spannung aufgrund des sich ausbildenden kapazitiven Spannungsteilers. Die Spannungsdifferenz zwischen dem beeinflussten Zustand des Schreibschutz-Kondensators durch die dritte Leitfläche 14c und dem unbeeinflussten Zustand des Schreibschutz-Kondensators aufgrund einer fehlenden dritten Leitfläche 14c kann messtechnisch erfasst werden und macht den Schreibschutzzustand der Schreibschutz-Sensorelemente 7a, 7b in Form des Schreibschutz-Kondensators erkennbar.

Die Spannung an der ersten Leitfläche 14a des Schreibschutz-Kondensators wird mit einer Messschaltung 15 hochohmig abgegriffen und der Auswerteeinrichtung 3 niederohmig zugeführt, sodass die Auswerteeinrichtung 3 eine entsprechende Auswertung des Schreibschutz-Zustandes vornehmen kann.

In der Fig. 4 ist zu sehen, dass der hochohmige Abgriff der Detektionsspannung von der ersten Leitfläche 14a über einen mit einem Operationsverstärker realisierten Trennverstärker (Buffer) realisiert ist. Am Ausgang des Operationsverstärkers ist mit einer Zehnerdiode und einem parallel und gegen Masse geschalteten RC-Glied ein Spitzenwert-Detektor realisiert, sodass die Messspannung Uₘ in einer Gleichspannung besteht, deren Höhe ausgewertet wird. Der dem Kondensator parallel geschaltete Widerstand dient der Entladung des Kondensators, sodass ein einmal detektierter Spitzenwert nur über eine gewisse Zeit gehalten wird.

### Bezugszeichen

- 1.: Durchflussmessgerät
- 2.: Gehäuse
- 3.: Auswerteeinrichtung
- 4.: Schnittstelle
- 5.: Bediengerät
- 6.: Messrohröffnung
- 7.: Schreibschutz-Sensorelemente
- 8.: Aufnahme
- 9.: Schreibschutz-Beeinflussungselement
- 10.: Siegel
- 11.: Magnetfeldsensoren
- 12.: Magnet
- 13.: Leiterplatte
- 14.: elektrische Leitflächen
- 15.: Messschaltung

## Patentansprüche

1. Durchflussmessgerät (1), insbesondere für den eichpflichtigen Verkehr, mit einem Gehäuse (2), wenigstens einer in dem Gehäuse angeordneten Auswerteeinrichtung (3) und mit einer in dem Gehäuse angeordneten Schnittstelle (4) zur Kommunikation mit einem externen Bediengerät (5), wobei die Auswerteeinrichtung (3) über die Schnittstelle (4) mit Daten beschreibbar ist,
**dadurch gekennzeichnet,**
**dass** in dem Gehäuse (2) wenigstens zwei Schreibschutz-Sensorelemente (7a, 7b) angeordnet sind, dass die Gehäuseaußenseite eine Aufnahme (8) für wenigstens ein Schreibschutz-Beeinflussungselement (9) aufweist, dass das Schreibschutz-Beeinflussungselement (9) im eingesetzten Zustand in der Aufnahme (8) die Schreibschutz-Sensorelemente (7a, 7b) in einen Schreibschutzzustand versetzt, dass der Schreibschutzzustand der Schreibschutz-Sensorelemente (7a, 7b) von der Auswerteeinrichtung (3) detektiert wird, wobei bei Detektion des Schreibschutzzustandes wenigstens eines der Schreibschutz-Sensorelemente (7a, 7b) von der Auswerteeinrichtung (3) zumindest teilweise ein Beschreiben der Auswerteeinrichtung (3) mit Daten über die Schnittstelle (4) verhindert wird.

2. Durchflussmessgerät (1) nach Anspruch 1, **dadurch gekennzeichnet, dass** bei Detektion des Schreibschutzzustandes wenigstens eines der Schreibschutz-Sensorelemente (7a, 7b) das Beschreiben der Auswerteeinrichtung (3) zumindest mit solchen Daten über die Schnittstelle (4) verhindert wird, die die Ermittlung des Durchflussmesswertes betreffen, insbesondere Kalibrierdaten.

3. Durchflussmessgerät (1) nach Anspruch 1 oder 2, **dadurch gekennzeichnet, dass** bei Detektion des Schreibschutzzustandes wenigstens eines der Schreibschutz-Sensorelemente (7a, 7b) das Beschreiben der Auswerteeinrichtung (3) verhindert wird durch Deaktivierung der Schnittstelle (4) oder durch Sperren des Beschreibens bestimmter Speicherbereiche der Auswerteeinrichtung (3).

4. Durchflussmessgerät (1) nach Anspruch einem der Ansprüche 1 bis 3, **dadurch gekennzeichnet, dass** die Aufnahme (8) so ausgestaltet ist, dass das Schreibschutz-Beeinflussungselement (9) im eingesetzten Zustand in der Aufnahme (8) definiert gehalten ist und die Position des Schreibschutz-Beeinflussungselements (9) durch ein Siegel (10) gesichert ist, insbesondere wobei das Siegel eine Plombe oder eine Siegelmarke ist, wobei das Schreibschutz-Beeinflussungselement (9) nur durch Bruch des Siegels (10) aus der Aufnahme (8) entfernbar ist.

5. Durchflussmessgerät (1) nach einem der Ansprüche 1 bis 4, **dadurch gekennzeichnet, dass** die Schreibschutz-Sensorelemente (7a, 7b) als Magnetfeldsensoren (11a, 11b) ausgestaltet sind und dass das Schreibschutz-Beeinflussungselement (9) als Magnet (12), insbesondere als Permanentmagnet, ausgestaltet ist.

6. Durchflussmessgerät (1) nach Anspruch 5, **dadurch gekennzeichnet, dass** die Magnetfeldsensoren (11a, 11b) als Grenzwertschalter ausgestaltet sind, insbesondere als Hall-Grenzwertschalter.

7. Durchflussmessgerät (1) nach Anspruch 5 oder 6, **dadurch gekennzeichnet, dass** der Magnet (12) und die Magnetfeldsensoren (11a, 11b) kollinear angeordnet sind, wobei die im eingesetzten Zustand des Magneten (12) in der Aufnahme (8) die Feldlinien der magnetischen Flussdichte des Magneten (12) im Wesentlichen in Richtung der kollinearen Anordnung des Magneten (12) und der Magnetfeldsensoren (11a, 11b) verlaufen.

8. Durchflussmessgerät (1) nach Anspruch 6 oder 7, **dadurch gekennzeichnet, dass** der Magnet (12) so ausgelegt ist, dass er im eingesetzten Zustand in der Aufnahme (8) am Montageort der als Grenzwertschalter ausgestalteten Magnetfeldsensoren (11a, 11b) eine magnetische Flussdichte erzeugt, die mindestens doppelt so stark ist wie der Grenzwert der Grenzwertschalter, vorzugsweise mindestens achtfach so stark ist wie der Grenzwert der Grenzwertschalter.

9. Durchflussmessgerät (1) nach einem der Ansprüche 5 bis 8, **dadurch gekennzeichnet, dass** die Magnetfeldsensoren (11a, 11b) dicht aneinander angeordnet sind, insbesondere auf zwei gegenüberliegenden Seiten einer Leiterplatte (13) angeordnet sind.

10. Durchflussmessgerät (1) nach einem der Ansprüche 1 bis 4, **dadurch gekennzeichnet, dass** die Schreibschutz-Sensoren als sich gegenüberliegende erste elektrische Leitfläche (14a) und zweite elektrische Leitfläche (14b) ausgestaltet sind und einen Schreibschutz-Kondensator bilden, und dass das Schreibschutz-Beeinflussungselement (9) als dritte elektrische Leitfläche (14c) ausgebildet ist, wobei die dritte Leitfläche (14c) im eingesetzten Zustand in der Aufnahme (8) dem Schreibschutz-Kondensator gegenübersteht und mit ihm einen kapazitiven Spannungsteiler bildet.

11. Durchflussmessgerät (1) nach Anspruch 10, **dadurch gekennzeichnet, dass** die erste Leitfläche (14a) oder die zweite Leitfläche (14b) des Schreibschutz-Kondensators mit einer periodischen elektrischen Spannung (Up) beaufschlagt wird, vorzugsweise mit einer periodischen elektrischen Spannung mit einem arithmetischen Mittelwert ungleich Null, insbesondere mit einer Rechteckspannung.

12. Durchflussmessgerät (1) nach Anspruch 11, **dadurch gekennzeichnet, dass** die sich einstellende Spannung an der ersten Leitfläche (14a) oder der zweiten Leitfläche (14b) des Schreibschutz-Kondensators mit einer Messschaltung (15) hochohmig abgegriffen und der Auswerteeinrichtung (3) niederohmig zugeführt und von der Auswerteeinrichtung (3) ausgewertet wird.

13. Durchflussmessgerät (3) nach einem der Ansprüche 10 bis 12, **dadurch gekennzeichnet, dass** die dritte Leitfläche (14c) im eingesetzten Zustand in der Aufnahme (8) geerdet ist.

## Claims

1. Flowmeter (1), in particular for use in custody transfer, having a housing (2), at least one evaluation unit (3) arranged in the housing and having an interface (4) arranged in the housing for communication with an external control unit (5), wherein the evaluation unit (3) can be written with data via the interface (4),
**characterized in**
**that** at least two write protection sensor elements (7a, 7b) are arranged in the housing (2), that the outside of the housing (2) has a receptacle (8) for at least one write protection influencing element (9), that the write protection influencing element (9) sets the write protection sensor elements (7a, 7b) into a write protection state when inserted in the receptacle (8), that the write protection state of the write protection sensor elements (7a, 7b) is detected by the evaluation unit (3), wherein, in detecting the write protection state of at least one of the write protection sensor elements (7a, 7b) by the evaluation unit (3), writing the evaluation unit (3) with data via the interface (4) is at least partially inhibited.

2. Flowmeter (1) according to claim 1, **characterized in that**, in detecting the write protection state of at least one of the write protection sensor elements (7a, 7b), writing the evaluation unit (3) with such data via the interface (4) that is related to determining the measured value of flow, in particular calibration data, is inhibited.

3. Flowmeter (1) according to claim 1 or 2, **characterized in that**, in detecting the write protection state of at least one of the write protection sensor elements (7a, 7b), writing the evaluation unit (3) is inhibited by deactivating the interface (4) or by blocking the writing of certain storage areas of the evaluation unit (3).

4. Flowmeter (1) according to any one of claims 1 to 3, **characterized in that** the receptacle (8) is designed so that the write protection influencing element (9) is held in a defined manner when inserted in the receptacle (8) and the position of the write protection influencing element (9) is protected by a seal (10), in particular wherein the seal is a lead seal or a seal label, wherein the write protection influencing element (9) can only be removed from the receptacle (8) by breaking the seal (10).

5. Flowmeter (1) according to any one of claims 1 to 4, **characterized in that** the write protection sensor elements (7a, 7b) are designed as magnetic field sensors (11a, 11b) and that the write protection influencing element (9) is designed as a magnet (12), in particular a permanent magnet.

6. Flowmeter (1) according to claim 5, **characterized in that** the magnetic field sensors (11a, 11b) are designed as limit switches, in particular as Hall limit switches.

7. Flowmeter (1) according to claim 5 or 6, **characterized in that** the magnet (12) and the magnetic field sensors (11a, 11b) are arranged co-linearly, wherein, when the magnets (12) are inserted in the receptacle (8), the field lines of the magnetic flux of the magnets (12) run essentially in the direction of the co-linear arrangement of the magnets (12) and the magnetic field sensors (11a, 11b).

8. Flowmeter (1) according to claim 6 or 7, **characterized in that** the magnet (12) is designed so that, when it is inserted in the receptacle (8) at the installation site of the magnetic field sensors (11a, 11b) designed as limit switches, it generates a magnetic flux that is at least twice as strong as the limit of the limit switch, preferably at least eight times as strong as the limit of the limit switch.

9. Flowmeter (1) according to any one of claims 5 to 8, **characterized in that** the magnetic field sensors (11a, 11b) are arranged close together, in particular on two opposing sides of a circuit board (13).

10. Flowmeter (1) according to any one of claims 1 to 4, **characterized in that** the write protection sensors are designed as a first electric conductivity surface (14a) and a second electric conductivity surface (14b) opposite one another and form a write protection capacitor, and that the write protection influencing element (9) is designed as a third electric conductivity surface (14c), wherein the third conductivity surface (14c) is opposite the write protection capacitor when inserted in the receptacle (8) and forms a capacitive voltage divider.

11. Flowmeter (1) according to claim 10, **characterized in that** the first conductivity surface (14a) or the second conductivity surface (14b) of the write protection capacitor is impinged with a periodic electric voltage (Up), preferably with a periodic electric voltage having an arithmetic mean not equal to zero, in particular having a square wave voltage.

12. Flowmeter (1) according to claim 11, **characterized in that** the self-adjusting voltage is tapped at a high resistance at the first conductivity surface (14a) or the second conductivity surface (14b) of the write protection capacitor using a measurement circuit (15), supplied at a low resistance to the evaluation unit (3) and evaluated by the evaluation unit (3).

13. Flowmeter (3) according to any one of claims 10 to 12, **characterized in that** the third conductivity surface (14c) is grounded when inserted in the receptacle (8).

## Revendications

1. Débitmètre (1), notamment pour une transaction avec obligation d'étalonnage, comprenant un boîtier (2), au moins un dispositif d'interprétation (3) disposé dans le boîtier et comprenant une interface (4) disposée dans le boîtier et destinée à la communication avec un appareil de commande (5) externe, des données pouvant être écrites vers le dispositif d'interprétation (3) par le biais de l'interface (4),
**caractérisé en ce que**
au moins deux éléments capteurs de protection en écriture (7a, 7b) sont disposés dans le boîtier (2), **en ce que** le côté extérieur du boîtier possède un logement (8) pour au moins un élément d'influence de la protection en écriture (9), **en ce que** l'élément d'influence de la protection en écriture (9), à l'état inséré dans le logement (8), met les éléments capteurs de protection en écriture (7a, 7b) dans un état de protection en écriture, **en ce que** l'état de protection en écriture des éléments capteurs de protection en écriture (7a, 7b) est détecté par le dispositif d'interprétation (3), une écriture de données vers le dispositif d'interprétation (3) par le biais de l'interface (4) étant au moins partiellement empêchée par le dispositif d'interprétation (3) en cas de détection de l'état de protection en écriture d'au moins l'un des éléments capteurs de protection en écriture (7a, 7b).

2. Débitmètre (1) selon la revendication 1, **caractérisé en ce qu'**en cas de détection de l'état de protection en écriture d'au moins l'un des éléments capteurs de protection en écriture (7a, 7b), l'écriture vers le dispositif d'interprétation (3) par le biais de l'interface (4) est au moins empêchée pour des données qui concernent la détermination de la valeur du débit, notamment des données d'étalonnage.

3. Débitmètre (1) selon la revendication 1 ou 2, **caractérisé en ce qu'**en cas de détection de l'état de protection en écriture d'au moins l'un des éléments capteurs de protection en écriture (7a, 7b), l'écriture vers le dispositif d'interprétation (3) est empêchée par la désactivation de l'interface (4) ou par le blocage de l'écriture de certaines zones de mémoire du dispositif d'interprétation (3).

4. Débitmètre (1) selon l'une des revendications 1 à 3, **caractérisé en ce que** le logement (8) est configuré de telle sorte que l'élément d'influence de la protection en écriture (9) est maintenu de manière définie dans l'état inséré dans le logement (8) et la position de l'élément d'influence de la protection en écriture (9) est sécurisée par un cachet (10), le cachet étant un plombage ou une marque de scellé, l'élément d'influence de la protection en écriture (9) ne pouvant être retiré du logement (8) que par une rupture du cachet (10).

5. Débitmètre (1) selon l'une des revendications 1 à 4, **caractérisé en ce que** les éléments capteurs de protection en écriture (7a, 7b) sont réalisés sous la forme de capteurs de champ magnétique (11a, 11b) et **en ce que** l'élément d'influence de la protection en écriture (9) est réalisé sous la forme d'un aimant (12), notamment sous la forme d'un aimant permanent.

6. Débitmètre (1) selon la revendication 5, **caractérisé en ce que** les capteurs de champ magnétique (11a, 11b) sont réalisés sous la forme de commutateurs à valeur limite, notamment sous la forme de commutateurs à valeur limite à effet Hall.

7. Débitmètre (1) selon la revendication 5 ou 6, **caractérisé en ce que** l'aimant (12) et les capteurs de champ magnétique (11a, 11b) sont disposés de manière colinéaire, les lignes de champ de la densité de flux magnétique de l'aimant (12), à l'état inséré de l'aimant (12) dans le logement (8), s'étendant sensiblement en direction de la disposition colinéaire de l'aimant (12) et des capteurs de champ magnétique (11a, 11b).

8. Débitmètre (1) selon la revendication 6 ou 7, **caractérisé en ce que** l'aimant (12) est configuré de telle sorte que dans l'état inséré dans le logement (8), il génère à l'endroit du montage des capteurs de champ magnétique (11a, 11b) réalisé sous la forme de commutateurs à valeur limite une densité de flux magnétique qui est au moins deux fois plus élevée que la valeur limite des commutateurs à valeur limite, de préférence au moins huit fois plus élevée que la valeur limite des commutateurs à valeur limite.

9. Débitmètre (1) selon l'une des revendications 5 à 8, **caractérisé en ce que** les capteurs de champ magnétique (11a, 11b) sont disposés proches les uns contre les autres, notamment disposés sur deux côtés opposés d'un circuit imprimé (13).

10. Débitmètre (1) selon l'une des revendications 1 à 4, **caractérisé en ce que** les capteurs de protection en écriture sont réalisés sous la forme d'une première surface conductrice électrique (14a) et d'une deuxième surface conductrice électrique (14b) en vis-à-vis l'une de l'autre et forment un condensateur de protection en écriture, et **en ce que** l'élément d'influence de la protection en écriture (9) est réalisé sous la forme d'une troisième surface conductrice électrique (14c), la troisième surface conductrice (14c), à l'état inséré dans le logement (8), se trouvant en face du condensateur de protection en écriture et formant avec lui un diviseur de tension capacitif.

11. Débitmètre (1) selon la revendication 10, **caractérisé en ce que** la première surface conductrice (14a) ou la deuxième surface conductrice (14b) du condensateur de protection en écriture est soumise à une tension électrique périodique (Up), de préférence à une tension électrique périodique ayant une valeur moyenne arithmétique différente de zéro, notamment à une tension rectangulaire.

12. Débitmètre (1) selon la revendication 11, **caractérisé en ce que** la tension qui s'établit au niveau de la première surface conductrice (14a) ou de la deuxième surface conductrice (14b) du condensateur de protection en écriture est prélevée sous haute impédance avec un circuit de mesure (15) et acheminée à basse impédance au dispositif d'interprétation (3) puis interprétée par le dispositif d'interprétation (3).

13. Débitmètre (1) selon l'une des revendications 10 à 12, **caractérisé en ce que** la troisième surface conductrice électrique (14c), à l'état inséré dans le logement (8), est reliée à la terre.
